# EUROPEAN PATENT APPLICATION

(11) **EP 2 881 894 A2**
(43) Date of publication of application: **10.06.2015**
(21) Application number: 14192161.9
(22) Date of filing: 06.11.2014
(51) Int. Cl.: G06K 9/32

(54) **Scaling mobile check photos to physical dimensions**

(30) Priority: 06.12.2013 US 201361912808 P; 19.12.2013 US 201314135516
(71) Applicant: EMC Corporation, Hopkinton, MA 01748 (US)
(72) Inventor: Kota, Rao, Hopkinton, MA Massachusetts 01748 (US); Koch, Guillaume, Hopkinton, MA Massachusetts 01748 (US); Flament, Arnaud, Hopkinton, MA Massachusetts 01748 (US); Ng, Ben, Hopkinton, MA Massachusetts 01748 (US)
(74) Representative: Freeman, Jacqueline Carol

(57) **Abstract**

A digital photo of an object is received. The digital photo is transformed to an image. A dimension for an anchor line is calculated based at least in part on the image. The image is scaled based at least in part on the dimension. A confidence value is calculated based at least in part on the scaled image.

## Description

This application claims priority to U.S. Provisional Patent Application No. 61/912,808 entitled SCALING MOBILE CHECK IMAGES TO PHYSICAL DIMENSIONS filed December 6, 2013.

### BACKGROUND OF THE INVENTION

Mobile check processing is becoming very popular as it offers the capability to deposit a check from a user's home or office to a financial institution without having to submit the physical check in-person or by mail/courier. Having very accurate data extraction from the submitted mobile check image is critical to the financial institution processing these images correctly.

The technology for processing "scanned" images of checks has existed for many years. These scanning devices reproduce any image and preserve the physical dimensions of the check because the device sensor scanning the image is almost in contact with paper, often against a platen.

Processing check digital photos captured by mobile phones and/or cameras is becoming widely popular as it offers the convenience of submitting the image from a user's home or office using smart phones. But these digital photos may be taken by amateur or unskilled photographers in various lighting conditions, at various distances from the check, and/or at various angles from the check. The digital photos of the check are thus scaled and do not preserve the dimensions in comparison to a scanned image physical check. Physical dimensions may always be lost in a digital picture irrespective of the quality of the image. In addition, within prescribed limits, the physical dimensions or proportions of a personal and/or business check may vary, further making processing digital photos of checks more challenging than scanned check images.

The current approaches to address this problem may include manual entry of data, by a human operating viewing the image at a back end processing location, and/or using Optical Character Recognition ("OCR") software capable of recognizing scaled fonts with usually substantive accuracy loss.

### BRIEF DESCRIPTION OF THE DRAWINGS

Various embodiments of the invention are disclosed in the following detailed description and the accompanying drawings.
Figure 1 is a functional diagram illustrating an image processing system in accordance with some embodiments.
Figure 2 illustrates a cartoon of a digital photo of a check created by taking a photo of the check using a mobile phone.
Figure 3A illustrates an example of challenges in an actual digital photo of a check.
Figure 3B illustrates an example of an image of a check.
Figures 4A and 4B illustrate embodiments of representations of the results of a first-level analysis using an optical character recognition (OCR) engine used in some embodiments to rescale check images back to original physical dimensions.
Figure 5 is a flow chart illustrating an embodiment of a process to rescale an image of a check or other physical object back to original physical dimensions of the object.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Techniques to increase the accuracy of automated capture of data from mobile phone or other camera-generated images of checks or other physical documents or objects that share certain attributes with checks are disclosed. In one embodiment, a check or other image is analyzed to detect one or more key fields. A dimension of a key field as shown/included in the image is compared to a known size of the key field as printed on the physical check. This comparison is used to rescale the image back to its original dimensions before processing for data extraction.

For over fifty years, an automated system to process checks has been used using magnetic ink character recognition ("MICR") technology. Two major MICR font systems are in use, the MICR E-13B font and the CMC-7 MICR font. Checks use MICR systems to encode a MICR line including a routing number, account number, and/or a check number. Both MICR systems use a combination of magnetic ink and robust physical specifications to ensure reliability in scanning even obscured and/or overprinted checks in a retail environment. For example, many characters within a MICR font have a specific height within tight tolerances such as those published in *ANSI Specification X9.27 - Print Specifications for Magnetic Ink Character Recognition* wherein in some cases a character may be 0.117 inches tall within 0.003 inches tolerance. Furthermore, while checks themselves may vary from 6 inches to 8.75 inches wide and 2.75 inches tall to 3.66 inches tall, the MICR print area where the MICR line is printed is fixed. The line is printed in an area of the bottom of the document called the clear band that is 5/8 inch tall from the bottom edge of the document, and the MICR print area is a ¼ inch tall centered vertically in the clear band. By employing tight specifications, MICR scanners reliably process MICR encoded checks everyday around the world with very little scanning error.

Exploiting this legacy characteristic of the MICR system, without necessarily employing the use of either a MICR scanner or an optical scanner, allows automated scaling of photos of checks taken by mobile devices to their proper physical dimension.

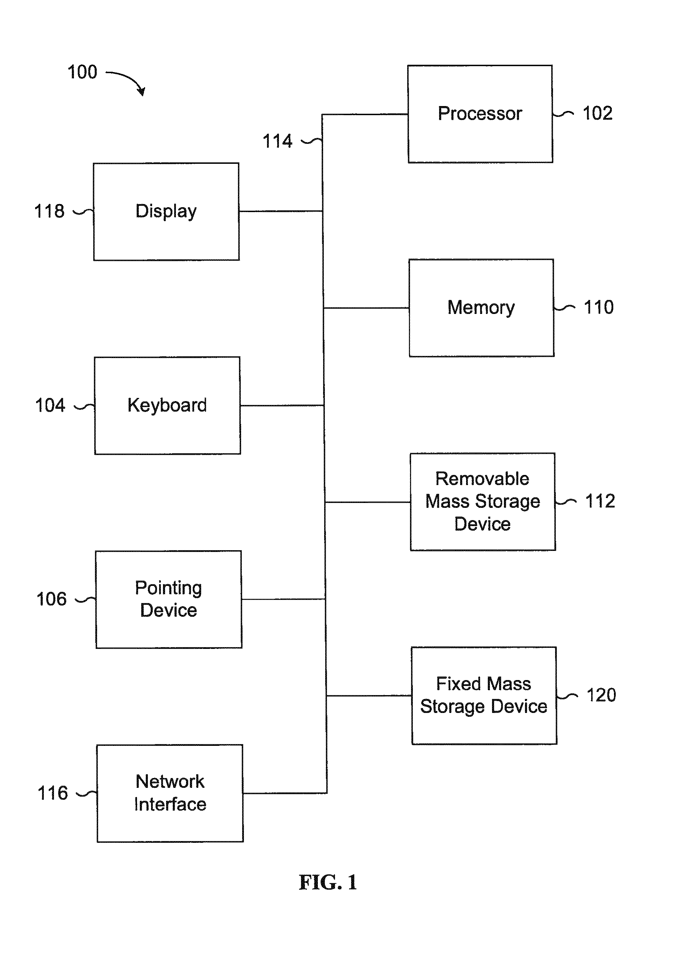

Figure 1 is a functional diagram illustrating an image processing system in accordance with some embodiments. As will be apparent, other system architectures and configurations can be used to perform image process as disclosed herein. Computer system 100, which includes various subsystems as described below, includes at least one microprocessor subsystem, also referred to as a processor or a central processing unit ("CPU") 102. For example, processor 102 can be implemented by a single-chip processor or by multiple cores and/or processors. In one embodiment, processor 102 is a general purpose digital processor that controls the operation of the computer system 100. Using instructions retrieved from memory 110, the processor 102 controls the reception and manipulation of input data, and the output and display of data on output devices, for example display 118.

Processor 102 is coupled bi-directionally with memory 110, which can include a first primary storage, typically a random-access memory ("RAM"), and a second primary storage area, typically a read-only memory ("ROM"). As is well known in the art, primary storage can be used as a general storage area and as scratch-pad memory, and can also be used to store input data and processed data. Primary storage can also store programming instructions and data, in the form of data objects and text objects, in addition to other data and instructions for processes operating on processor 102. Also as well known in the art, primary storage typically includes basic operating instructions, program code, data and objects used by the processor 102 to perform its functions, for example programmed instructions. For example, primary storage devices 110 can include any suitable computer-readable storage media, described below, depending on whether, for example, data access needs to be bi-directional or uni-directional. For example, processor 102 can also directly and very rapidly retrieve and store frequently needed data in a cache memory, not shown. The block processor 102 may also include a coprocessor (not shown) as a supplemental processing component to aid the processor and/or memory 110.

A removable mass storage device 112 provides additional data storage capacity for the computer system 100, and is coupled either bi-directionally (read/write) or unidirectionally (read only) to processor 102. For example, storage 112 can also include computer-readable media such as magnetic tape, flash memory, PC-CARDS, portable mass storage devices, holographic storage devices, and other storage devices. A fixed mass storage 120 can also, for example, provide additional data storage capacity. The most common example of mass storage 120 is a hard disk drive. Mass storage 112, 120 generally store additional programming instructions, data, and the like that typically are not in active use by the processor 102. It will be appreciated that the information retained within mass storage 112, 120 can be incorporated, if needed, in standard fashion as part of primary storage 110, for example RAM, as virtual memory.

In addition to providing processor 102 access to storage subsystems, bus 114 can be used to provide access to other subsystems and devices as well. As shown, these can include a display monitor 118, a network interface 116, a keyboard 104, and a pointing device 106, as well as an auxiliary input/output device interface, a sound card, speakers, and other subsystems as needed. For example, the pointing device 106 can be a mouse, stylus, track ball, or tablet, and is useful for interacting with a graphical user interface.

The network interface 116 allows processor 102 to be coupled to another computer, computer network, or telecommunications network using a network connection as shown. For example, through the network interface 116, the processor 102 can receive information, for example data objects or program instructions, from another network, or output information to another network in the course of performing method/process steps. Information, often represented as a sequence of instructions to be executed on a processor, can be received from and outputted to another network. An interface card or similar device and appropriate software implemented by, for example executed/performed on, processor 102 can be used to connect the computer system 100 to an external network and transfer data according to standard protocols. For example, various process embodiments disclosed herein can be executed on processor 102, or can be performed across a network such as the Internet, intranet networks, or local area networks, in conjunction with a remote processor that shares a portion of the processing. Throughout this specification "network" refers to any interconnection between computer components including the Internet, Ethernet, intranet, local-area network ("LAN"), home-area network ("HAN"), serial connection, parallel connection, wide-area network ("WAN"), Fibre Channel, PCI/PCI-X, AGP, VLbus, PCI Express, Expresscard, Infiniband, ACCESS.bus, Wireless LAN, WiFi, HomePNA, Optical Fibre, G.hn, infrared network, satellite network, microwave network, cellular network, virtual private network ("VPN"), Universal Serial Bus ("USB"), FireWire, Serial ATA, 1-Wire, UNI/O, or any form of connecting homogenous, heterogeneous systems and/or groups of systems together. Additional mass storage devices, not shown, can also be connected to processor 102 through network interface 116.

An auxiliary I/O device interface, not shown, can be used in conjunction with computer system 100. The auxiliary I/O device interface can include general and customized interfaces that allow the processor 102 to send and, more typically, receive data from other devices such as microphones, touch-sensitive displays, transducer card readers, tape readers, voice or handwriting recognizers, biometrics readers, cameras, portable mass storage devices, and other computers.

In addition, various embodiments disclosed herein further relate to computer storage products with a computer readable medium that includes program code for performing various computer-implemented operations. The computer-readable medium is any data storage device that can store data which can thereafter be read by a computer system. Examples of computer-readable media include, but are not limited to, all the media mentioned above: magnetic media such as hard disks, floppy disks, and magnetic tape; optical media such as CD-ROM disks; magneto-optical media such as optical disks; and specially configured hardware devices such as application-specific integrated circuits ("ASIC"s), programmable logic devices ("PLD"s), and ROM and RAM devices. Examples of program code include both machine code, as produced, for example, by a compiler, or files containing higher level code, for example a script, that can be executed using an interpreter.

The computer system shown in Figure 1 is but an example of a computer system suitable for use with the various embodiments disclosed herein. Other computer systems suitable for such use can include additional or fewer subsystems. In addition, bus 114 is illustrative of any interconnection scheme serving to link the subsystems. Other computer architectures having different configurations of subsystems can also be utilized.

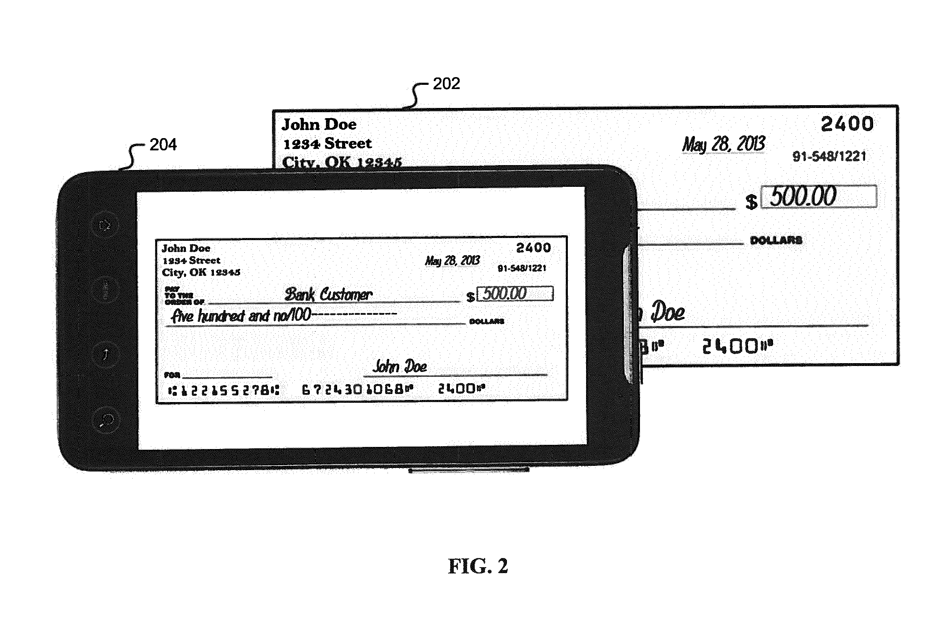

Figure 2 illustrates a cartoon of a digital photo of a check created by taking a photo of the check using a mobile phone. In the example shown, a check (202) is captured by mobile phone (204), and a scaled photo of the check is created and sent via a mobile and/or other network to a check processing location, from which data needed to process the check properly must be captured and processed. In various embodiments, the image is pre-processed as disclosed herein to scale it back of the original dimensions of the physical check, prior to using existing data extraction software to capture the check data from the rescaled image.

For example, the MICR line at the bottom of the check may be detected, e.g., based in part on its location near the bottom of the image, and the size of the MICR line within the received image is compared to the known (precisely prescribed) size as printed on the original check, and the comparison is used to rescale the image to the original dimensions of the physical check. The cartoon depicted in Fig. 2 may be oversimplify the challenges involved in taking a high-quality photo of a check with a mobile phone or smart phone.

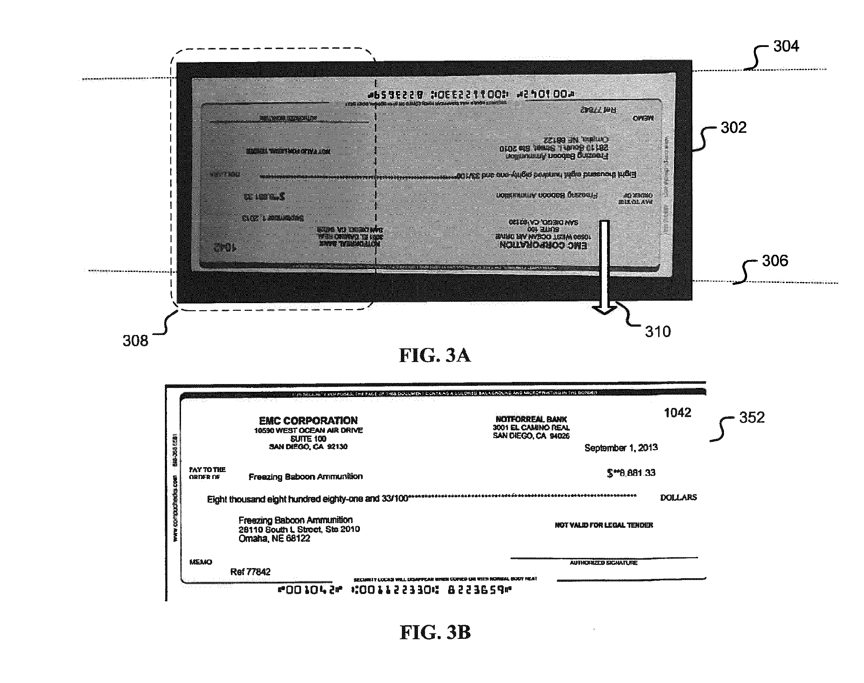

Figure 3A illustrates an example of challenges in an actual digital photo of a check. In one embodiment, the phone (204) in Fig. 2 captured a photo of check (202) and the resultant digital photo (302) is sent via the mobile and/or other network to the check processing location. There are numerous challenges with a digital photo, and without loss of generality a few are shown in Fig. 3A. Because the baseline edge of the check depicted by a parallel dotted line (304) is rotated, the digital photo has rotational distortion. Furthermore, the topline edge of the check depicted by second dotted line (306) is also rotated at a different non-parallel rotational angle than the baseline (304), and one inference if the check (302) is rectangular is that perspective and/or trapezoidal distortion may have occurred due to a user holding the photo at an angle to the check and/or surface. Furthermore, the digital photo has variance in lighting and/or shadows, depicted by a dashed box (308) around the darker area. One other "distortion" is the fact that the image is upside down or nearly 180 degrees rotated (310). Besides these distortions (304), (306), (308), and (310), the digital photo is not necessarily of the proper scale and dimension to be analyzed with great success.

The check shown in Fig. 3A may have unknown physical dimensions/proportions (e.g., height and width), within limits prescribed by industry standard and/or regulation, but the MICR line at the bottom will be printed in a prescribed location and will within tight tolerances be of a known prescribed height, for example, which typically will be the same regardless of the size of the check.

Figure 3B illustrates an example of an image of a check. In one embodiment, the image of the check (352) in Fig. 3B is the image of the check depicted in digital photo (302) as scanned in by a computer scanner device with a platen to a physical dimension. The image of the check (352) in Fig. 3B is also the image of the check after the process of: transforming the digital photo (302) to an image, calculating a height for MICR system in the image, and scaling the image based at least in part on the height. The process reduces the challenges depicted in distortions (304), (306), (308), and (310) in scaling and machine reading the digital photo (302).

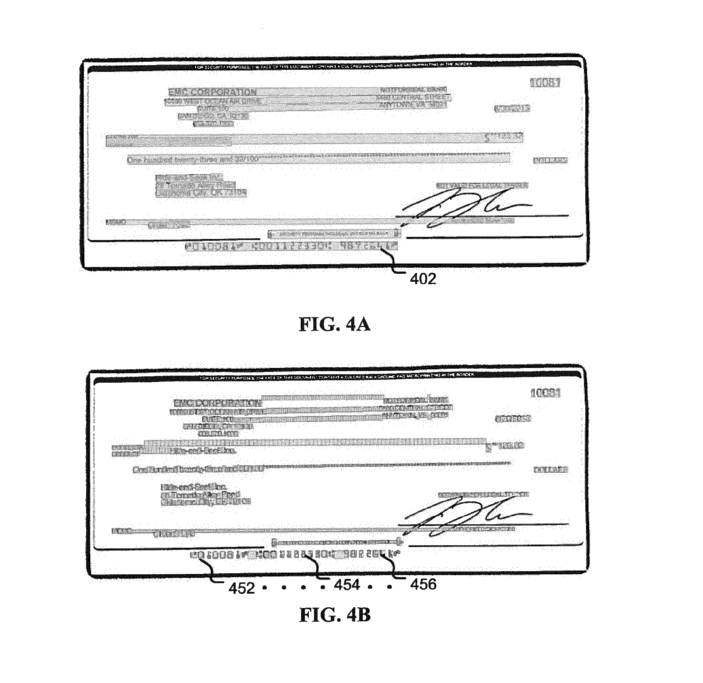

Figures 4A and 4B illustrate embodiments of representations of the results of a first-level analysis using an optical character recognition (OCR) engine used in some embodiments to rescale check images back to original physical dimensions. In some embodiments, existing OCR software is used to detect text lines in an image of a check. One or more candidate lines are evaluated, e.g., iteratively, to detect an MICR line or other line of sufficiently precisely known height and/or other dimensions.

For example, in Fig. 4A the bottom-most line (402) may be evaluated first. In some embodiments, heights of individual characters in a line being evaluated, for example character bounding boxes (452), (454), (456), and so forth in Fig. 4B, may be calculated and analyzed in a descending or other order to more reliably determine a character and/or anchor height associated with the line. For example, in the example shown in Figs. 4A and 4B, sorting by character height enables relatively shorter control characters to be distinguished from numerical characters. Based on this simple anchor metric, for example a line height for the bottom line, the process then scales the entire transformed image by a scaling factor under the assumption the line height is identical to the MICR system height, in some cases 0.117 inches for MICR E13-B.

In one embodiment, a second-level analysis is performed on the same line of the scaled image using an OCR engine, contributing the information bootstrapped from the anchor height analysis. Without loss of generality, any person having ordinary skill in the art will understand the first-order analysis in fact does not rely on an OCR engine or OCR technologies, as it simply needs to find the bottom line's height. In one embodiment, an OCR engine is needed for the second-order analysis and so it is convenient to use the OCR engine for the first-analysis as well. In various mobile and/or embedded solutions it may be more power/computationally efficient to use a reduced engine for the first-level analysis.

After the second-level analysis, a confidence metric may be calculated by passing through the scaled image through an OCR engine based on the known MICR system. This confidence metric may be any statistical, probabilistic, and/or stochastic measure of the confidence of the success of the process. The confidence metric may be calculated and/or passed in by, for example, the OCR engine. The physically robust nature of the MICR code for magnetic scanning is also optically robust providing a level of confidence with regards to the success of the transformation and scaling operations. In the event that the second-level analysis confidence metric is below a specified threshold, the first-level analysis may be repeated in an iterative process with the next available line, for example the second line from the bottom.

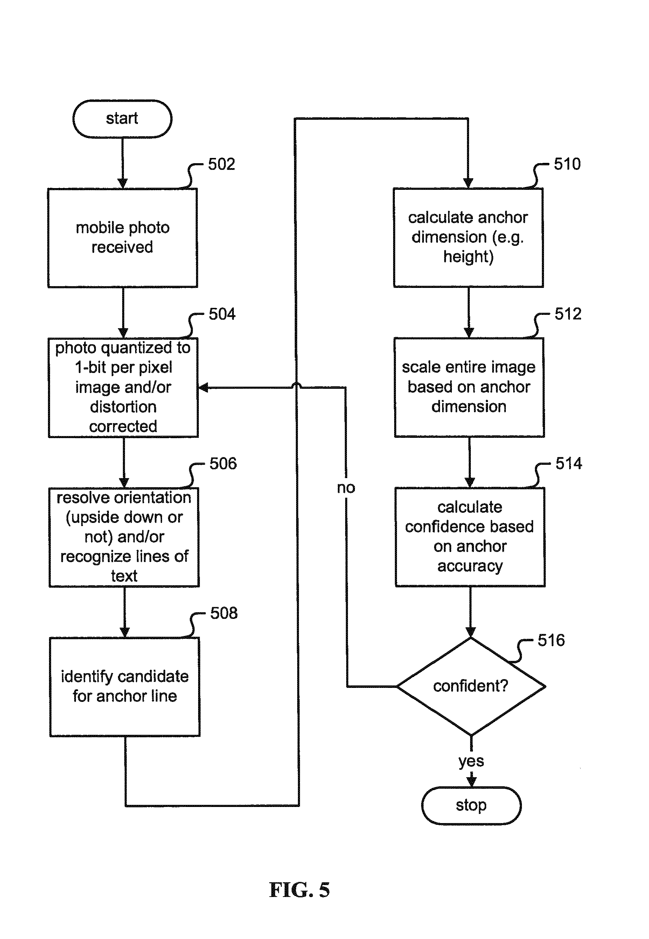

Figure 5 is a flow chart illustrating an embodiment of a process to rescale an image of a check or other physical object back to original physical dimensions of the object. In the example shown, in step 502 a digital photo of the check or other object is received. The digital photo (202) is taken by a mobile device, for example mobile phone (204) in Fig. 2.

In step 504, the photo is transformed to an image by correcting distortion. Any person having ordinary skill in the art will understand distortion may without loss of generality include: perspective distortion, keystone distortion, radial distortion, cylindrical distortion, spherical distortion, barrel distortion, pincushion distortion, fisheye distortion, lighting distortion, shadow distortion, image geometry distortion, translational distortion, rotational distortion, and trapezoidal distortion. In one embodiment, the photo is also cropped using edge detection to remove irrelevant portions of data from the photo. In step 504, the photo will also be transformed to an image by quantizing the photo (202). In one embodiment, the quantization in a binarization to a black and white image with one bit per pixel, or another quantization scheme.

In step 506, orientation is resolved to determine whether the quantized image is upside-down or right side up. In one embodiment, this is performed using an OCR engine to make a broad recognition of standard fonts over all lines of text within the quantized image. Any person having ordinary skill in the art will understand that without loss of generality other methods besides using an OCR engine may be used to resolve orientation using other image processing and/or computer vision techniques.

In step 508, a candidate for an anchor line, for example, an MICR or other line of known height, is selected. For a first iteration, the bottom line may be used as the candidate. For a second or further iteration if the bottom line is not suitable may be a second-to-bottom line, a third-to-bottom line, or it may be a top line with the assumption that the image must be rotated 180 degrees because orientation was not resolved correctly in step 506.

In step 510, an anchor dimension such as the height of the anchor line is determined. In one embodiment, this is determined by finding a bounding box (402) for the entire line as shown in Fig. 4A. In one embodiment, this is determined by finding a plurality of bounding boxes (452), (454), and so on until (456) for characters along the line as shown in Fig. 4B, and analyzing the height of each of the individual bounding boxes (452) - (456) as described above. A height of the anchor line may be calculated in pixels, for example 50 pixels in one example. In one embodiment, the bounding box(s) height may be calculated using a first-level analysis with an OCR engine. In one embodiment, the bounding box(s) height may be calculated without using any OCR analysis

In step 512, the entire image is scaled based on the calculated anchor line dimension. For the example described in step 510, the scaling may be based on a dots-per-inch ("DPI") such that there are 50 pixels/dots per 0.117 inch, which results in 427.35 DPI. Thus the entire image is scaled and/or normalized to a known DPI and/or physical dimension.

In step 514, a confidence level that the correct anchor/MICR line has been selected and used is determined. In one embodiment, the confidence metric is based on an analysis from an OCR engine, for example a second-level analysis. The second-level analysis determines a confidence metric is calculated by passing through the scaled image through an OCR engine based on the known MICR system and reviewing a statistical analysis directly or indirectly derived from the OCR engine, for example a least-squares analysis.

In step 516, in the event that the second-level analysis confidence metric is below a specified threshold, the first-level analysis may be repeated in an iterative process with the next available line, for example the second line from the bottom or the top line, flipping the image 180 degrees, as described above.

Although the foregoing embodiments have been described in some detail for purposes of clarity of understanding, the invention is not limited to the details provided but only to the scope of the claims. There are many alternative ways of implementing the invention. The disclosed embodiments are illustrative and not restrictive.

## Claims

1. A method, comprising:
receiving a digital photo of an object;
transforming the digital photo to an image;
calculating a dimension for an anchor line based at least in part on the image;
scaling the image based at least in part on the dimension; and
calculating a confidence value based at least in part on the scaled image.

2. The method of claim 1, wherein the digital photo is taken by a mobile device.

3. The method of claim 1, wherein the object is a check.

4. The method of claim 1, wherein transforming comprises quantizing the digital photo, or comprises orienting the image from upside-down, or comprises correcting for distortion, or comprises passing the digital photo to an optical character recognition ("OCR") engine.

5. The method of claim 4, wherein quantizing comprises quantizing the digital photo to one bit per pixel.

6. The method of claim 4, wherein correcting for distortion comprises one or more of the following: perspective correction, keystone correction, radial distortion correction, cylindrical distortion correction, spherical distortion correction, barrel distortion correction, pincushion distortion correction, fisheye distortion correction, lighting distortion, shadow distortion, image geometry correction, translational correction, rotational correction, and trapezoidal correction.

7. The method of claim 1, wherein calculating comprises calculating the dimension based at least in part on a dimension of a box bounding the anchor line, or based at least in part on a dimension of a box bounding a character on the anchor line.

8. The method of claim 1, wherein the dimension is a height.

9. The method of claim 1, wherein the anchor line is a line with known and precise height.

10. The method of claim 9, wherein the anchor line is a magnetic ink character recognition ("MICR") line.

11. The method of claim 10, wherein the MICR line is encoded by one or more of the following: MICR E-13B and CMC-7 MICR.

12. The method of claim 11, wherein the object is a document that was not originally intended for transforming to an image.

13. The method of claim 1, wherein calculating a confidence value comprises passing the scaled image to an OCR engine.

14. The method of claim 1, further comprising iterating the steps of calculating the dimension, scaling the image, and calculating the confidence value a plurality of iterations.

15. A system, comprising:
a processor configured to:
receive a digital photo of an object;
transform the digital photo to an image;
calculate a dimension for an anchor line based at least in part on the image;
scale the image based at least in part on the dimension; and
calculate a confidence value based at least in part on the scaled image; and
a memory coupled to the processor and configured to provide the processor with instructions.

16. A computer program product, the computer program product being embodied in a tangible computer readable storage medium and comprising computer instructions for:
receiving a digital photo of an object;
transforming the digital photo to an image;
calculating a dimension for an anchor line based at least in part on the image;
scaling the image based at least in part on the dimension; and calculating a confidence value based at least in part on the scaled image.
